# EUROPEAN PATENT SPECIFICATION

(11) **EP 1 214 372 B1**
(45) Date of publication and mention of the grant of the patent: **28.12.2005**
(21) Application number: 00957943.4
(22) Date of filing: 01.09.2000
(51) Int. Cl.: C08J 9/14, C08J 9/00

(54) **INSULATING EXTRUDED FOAMS HAVING A MONOVINYL AROMATIC POLYMER WITH A BROAD MOLECULAR WEIGHT DISTRIBUTION**
EXTRUDIERTER POLYSTYROLISOLIERSCHAUM MIT BREITER MOLEKULARGEWICHTVERTEILUNG
MOUSSES ISOLANTES EXTRUDEES POSSEDANT UN POLYMERE AROMATIQUE DE MONOVINYLE A LARGE DISTRIBUTION DE POIDS MOLECULAIRE

(30) Priority: 03.09.1999 US 152530 P; 08.09.1999 US 152845 P; 10.09.1999 US 153320 P
(43) Date of publication of application: 19.06.2002
(73) Proprietor: DOW GLOBAL TECHNOLOGIES INC., Midland, Michigan 48674 (US)
(72) Inventor: DUFFY, John, D., F-67610 La Wantzenau (FR); VO, Chau, V., F-67460 Souffelweyersheim (FR); MASON, Jeffrey, J., D-77815 Buehl (DE); PAQUET, Andrew, N., Saginaw, MI 48603 (US)
(74) Representative: Burford, Anthony Frederick
(86) International application number: PCT/US2000/024115
(87) International publication number: WO 2001/018098

(56) References cited:
- EP-A- 0 361 096
- EP-A- 0 543 242
- US-A- 5 149 473
- US-A- 5 182 308
- US-A- 5 650 106

## Description

This invention relates to an improved insulating extruded monovinyl aromatic polymer foam comprising a monovinyl aromatic polymer with a broad molecular weight distribution (MWD) of certain configuration, and to an improved process for making the foam.

Historically, chlorofluorocarbons were employed as blowing agents in making monovinyl aromatic polymer foams for insulating applications. The foams provided excellent insulation performance of long duration.

Due to concerns over potential ozone depletion, hydrochlorofluorocarbons (HCFCs), such as 1-chloro-1,1-difluoroethane (HCFC-142b), have largely replaced chlorofluorocarbons (CFCs) as a blowing agent in making monovinyl aromatic polymer foams for thermal insulation. Such foam applications provide excellent insulating performance while exhibiting substantially lower ozone depletion potential relative to foams made with CFCs.

It is desirable to employ blowing agents with very limited, preferably zero, ozone depletion potential. Possible agents in the latter category include carbon dioxide (CO₂) and 1,1,1,2-tetrafluoroethane (HFC-134a).

A problem with using blowing agents such as CO₂ or HFC-134a is that they exhibit high vapor pressure and low solubility, relative to CFCs, in melts of monovinyl aromatic polymers. As a result, extrusion foaming systems employing them can experience processing problems, such as high operating pressures and high die pressure, and product problems, such as poor skin quality, high density, and small foam cross-section resulting from very small cell sizes.

US-B-5,011,866 discloses using HFC-134a or 1,1,1 trifluoroethane (HFC-143a), and optionally other blowing agents, to produce foam with good dimensional stability.

US-B-5,182,308 and EP-A-0464581 disclose a mixture of blowing agents containing CO₂, ethanol, and an optional third component. US-B-5,334,337 and EP-A-0543242 disclose the use of a mixture of blowing agents including an alcohol or ketone, a fluorinated hydrocarbon and optional components.

US-B-5,650,106 discloses one approach to solving these problems by using a polystyrene with a broad MWD to produce foam at reduced operating pressures, increased cross-section and lower foam density relative to a conventional foam feedstock.

EP-A-0802220 discloses foamed plastic panels of a polystyrene (PS) thermoplastic matrix where the PS has a mean weight average molecular weight (M_{w}) of from 175,000 and 500,000 and a MWD or M_{w}/Mₙ greater than (>) 2.6. Panel production uses a halogen-free blowing agent containing CO₂, an ether and optional components.

The aforementioned prior art processes generally produce foams with small cell size and poor insulating properties.

It would be desirable to produce foam with good insulating qualities and dimensional stability with minimal environmental impact, while reducing processing problems associated with prior art attempts to achieve these goals.

This invention provides an insulating, extruded, closed-cell, thermoplastic polymer foam having a thermal conductivity (TC) according to EN-13164 of 30 mW/m.°K or less (s), and a closed cell content of 90% or greater as measured by ASTM D-2856, comprising:
(A) a polymer comprising, in polymerized form, 50 percent or more by weight (wt%) monovinyl aromatic monomeric units, and having a mean weight average molecular weight (M_{w}) of from 130,000 to 400,000, and a M_{w}/Mₙ of 2.5 or greater (≥);
(B) blowing agent residuals from production of freshly formed cells of the foam by extruding a mixture of the polymer and a blowing agent mixture comprising:
   (i) a primary blowing agent comprising:
      (a) from 30 to 90 wt%, based on blowing agent mixture weight, of one or more fluorinated hydrocarbons, and, optionally,
      (b) from > 0 to 50 wt%, based on blowing agent mixture weight, CO₂; the sum of gram-moles of fluorinated hydrocarbon(s) and, if present, carbon dioxide in the blowing agent mixture being equal to or less than 0.09 gram-moles per 100 grams of polymer, and the molar ratio of moles of carbon dioxide to moles of fluorinated hydrocarbon(s) being 0.8 or less;
   (ii) from 10 to 70 wt%, based on blowing agent mixture weight, of a secondary blowing agent comprising an alcohol having from 1 to 4 carbon atoms(C₁₋₄), a linear or cyclic hydrocarbon having from 1 to 5 carbon atoms(C₁₋₅), water or a mixture thereof. The CO₂ and fluorine-containing carbon compounds are desirably present in a molar ratio of CO₂ to such compounds ≤ 0.8.

Further, this invention provides a process for producing such an extruded, polymer foam that comprises:
a) producing a melt polymer material by heating a polymer comprising, in polymerized form, ≥ 50 wt%, based on weight of monovinyl aromatic monomeric units, and having a mean M_{w} of from 130,000 to 400,000, and a M_{w}/Mₙ ≥ 2.5 or greater;
b) forming a foamable gel by incorporating into the melt polymer material at an elevated temperature a blowing agent mixture comprising:
   (i) a primary blowing agent comprising:
      (a) from 30 to 90 wt%, based on blowing agent mixture weight, of one or more fluorinated hydrocarbon, and, optionally,
      (b) from > 0 to 50 wt%, based on blowing agent mixture weight, CO₂; the sum of gram-moles of fluorinated hydrocarbon(s) and, if present, carbon dioxide in the blowing agent mixture being equal to or less than 0.09 gram-moles per 100 grams of polymer, and the molar ratio of moles of CO₂ to moles of fluorinated hyrdrocarbon(s) being 0.8 or less;
   (ii) from 10 to 70 wt%, based on blowing agent mixture weight, of a secondary blowing agent comprising a C₁₋₄ alcohol, a linear or cyclic C₁₋₅, water or a mixture thereof;
c) cooling the formable gel to a desirable foaming temperature;
d) extruding the foamable gel through a die to form the foam.

Suitably, carbon dioxide is present in an amount of from 0.1 to 20 percent by weight of the blowing agent mixture.

Suitably the fluorinated hydrocarbon is selected from methyl fluoride, difluoromethane (HFC-32), perfluoromethane , ethyl fluoride (HFC-161), 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), pentafluoroethane (HFC-125), perfluoroethane, 2,2-difluoropropane (HFC-272fb), 1,1,1-trifluoropropane (HFC-263fb), 1,1,1,3,3-pentafluoropropane (HFC-245fa), heptafluoropropane (HFC-227ca and HFC-227ea), 1,1,1,3,3-pentafluorobutane (HFC-365mfc), perfluoropropane, perfluorobutane or perfluorocyclobutane. Preferably, the fluorinated hydrocarbon is 1,1,1,2-tetrafluoroethane (HFC-134a).

Suitably, the secondary blowing agent is methane, ethane, propane, n-butane, isobutane, n-pentane, isopentane, neopentane, cyclobutane, cyclopentane, methanol, ethanol, n-propanol and isopropanol, or a mixture thereof.

The foam of the invention has a closed cell content of 90 percent or greater as measured by ASTM D-2856.

The cross sectional area of the foam in the direction of extrusion suitably is 50 cm² or greater.

The thickness of the foam suitably is from 5 mm to 250 mm.

The average cell size of the foam suitably is from 0.07 to 1.4 mm.

The foam can further comprises an infrared attenuator, especially one selected from carbon black, graphite, aluminum flake or titanium dioxide.

The foam suitably has a density of from 10 to 150 kg/m³ (kilograms per cubic meter) according to ASTM D-1622-88.

The scope of this invention also includes the foam produced by the aforementioned process.

This invention involves using unique combinations of materials to produce extruded monovinyl aromatic polymer (preferably PS) foam structures, using a blowing agent mixture. The most preferred polymer, a broad MWD PS, and a preferred blowing agent mixture (comprising HFC-134a and/or another hydrogen containing fluorocarbons, CO₂, an alcohol, and/or water, and/or a hydrocarbon) are mixed in an extruder or mixer at a temperature of 175-250 °Celsius (°C). This mixture is then cooled in a controlled manner using a second extruder and/or heat exchangers before being allowed to expand in a controlled manner through a die at a temperature of 105-130 °C.

The PS desirably has a mean M_{w} of from 130,000 to 400,000 and an M_{w}/Mₙ of > 2.5 (determined according to American Society for Testing and Materials (ASTM) 5296-92). A preferred PS has a mean M_{w} of from 130,000 to 350,000. The use of these PS resins is desirable for the production of some materials, since it permits the production of desired foam cross-sections at low density and a high processing rate, even though the levels of a more soluble secondary blowing agent or processing agent are low. This PS is made with a non-symmetric distribution of molecular weights that provides a preferred melt strength for a very high melt flow PS. The PS has a melt flow rate (MFR) of 5-50 grams per 10 minutes (g/10 min) (ASTM-1238, Condition 200/5).

Foams produced according to the present invention have low density and excellent long-term thermal conductivity, ≤ 30 mW/m.°K (milli-watt per meter per degree Kelvin), as determined with the slicing technique according to the test method EN-13164.

Conventional PS resins used in making foamed sheet and plank often have narrow MWDs and low melt flow rates (MFR<5 g/10 min). Such resins require high levels of blowing agents to give products with reasonable cross-sections. However, such blowing agent levels typically result in a high open cell content with poor insulating properties (relative to closed-cell foams). A low production rate is an additional penalty. However, if the foam is to be used in some other application, such as a vacuum insulation panel core, preferred foams are primarily open celled.

Fluorinated hydrocarbons, particularly HFC-134a, HFC-134, HFC-32, HFC-245fa, HFC-365mfc, HFC-227, HFC-161, HFC-152a, HFC-125 or HFC-143a and the non-fluorinated blowing agent, CO₂, are known to have limited solubility in monovinyl aromatic polymers, particularly at the foaming temperature range, making their use with conventional PS resins limited. That is to say, foams can be made, but the cross-sectional area achieved is less than desirable and difficult to control due to very small cell size formation.

Additional processing aids, such as alcohols, hydrocarbons or mixtures thereof, can be added to the process as secondary blowing agents, and these help to improve resulting cross-sectional areas. However, high levels of, for example, alcohol, result in a product that requires long periods of curing before mechanical and thermal stability is achieved, and also results in undesirably high emission levels and flammability concerns during processing, storage, and foam use.

By using a PS resin with a broad MWD or polydispersity and low levels of the secondary blowing agents, it is possible to produce products of high thickness range with a closed cell structure and acceptable density. Foam made with a PS resin that has a MWD > 2.5 will give improved physical properties over foam made with a PS resin with a polydispersity < 2.5. The blowing agent mixture is used in a concentration of from 0.08 gram-moles to 0.2 gram-moles per 100 grams of polymer (gmph). The sum of gram-moles of fluorinated hydrocarbon(s) and CO₂ is ≤ 0.09 gmph, preferably ≤ 0.085 gmph.

In one preferred embodiment of this invention, the foam comprises a linear, broad MWD monovinyl aromatic polymer having an M_{w} of from 130,000 to 350,000. In meeting this MWD limitation, greater than (>) 5 wt%, preferably > 10 wt%, of the polymer's chains have a M_{w} of from 500,000 to 1,000,000, based upon the total weight of monovinyl aromatic polymer chains. In addition, less than (<) 5 wt% of the polymer's chains have M_{w} > 1,000,000, based upon the total weight of monovinyl or alkenyl aromatic polymer chains. For purposes of polymer chain wt% calculations, polymer chains are polymer molecules that have at least ten monovinyl aromatic monomeric units. Residual monomer and oligomer content are excluded (not included) for calculation purposes. The polymer preferably has a Z-average molecular weight (M_{z}) of from 200,000 to 900,000 and more preferably from 250,000 to 600,000. The polymer preferably has a M_{w}/Mₙ of from 2.5 to 10, more preferably from 2.7 to 7. The polymer preferably has a M_{z}/M_{w} ratio of from 1.5 to 5, more preferably form 1.8 to 4. The polymer preferably exhibits a MFR of from 6 to 99, more preferably from 15 to 60, g/10 min (ASTM 1238, Condition 200/5). M_{w} and M_{z} are both determined according to size exclusion chromatography (SEC) using ASTM 5296-92.

The linear, broad MWD monovinyl aromatic polymer useful in foams of the present invention may be prepared by blending two or more linear monovinyl aromatic polymers of different MWDs or by in-situ polymerization. Advantageously, the broad MWD polymer may be formed by feeding a previously polymerized higher molecular weight polymer dissolved in monomer into a polymerization zone or reactor wherein an intermediate weight polymer is produced in the presence of the high molecular weight polymer. Such polymerizations are described in US-B-4,585,825. By way of illustration, a broad MWD linear monovinyl aromatic polymer is shown in FIG. 3 of US-B-4,585,825.

It was found surprising that an extruded foam could be made at lower system pressure drop and die pressure with the broad MWD, linear monovinyl aromatic polymer described above compared to conventional monovinyl aromatic polymers of equivalent M_{w} typically employed commercially to produce foams. It was further found surprising that foams of lower density and larger cross-section could be produced compared to foams made with the conventional monovinyl aromatic polymers. Additionally, it was found surprising that specific relative amounts of the desired non-ozone depleting blowing agents (HFCs and CO₂) are required to achieve desired foam closed cell content and insulating performance.

The unique broad MWD of the linear monovinyl aromatic polymer may provide the surprising extrusion foaming performance. A majority distribution of polymer chains with a M_{w} of from 25,000 to 100,000 provides a polymer in melt form that exhibits a low shear viscosity relative to conventional PS feedstocks for foam production. This shear viscosity affords a reduction in system pressure drop and die pressure, particularly when employing blowing agents of relatively high vapor pressure and low solubility in melts of monovinyl aromatic polymers as exemplified by CO₂ and HFC-134a under typical process temperatures and pressures. The distribution of polymer chains with a M_{w} > 500,000 provides greater (relative to the above lower Mw polymer chains and conventional PS feedstocks) polymer elongational viscosity in melt form, which affords relatively low density and large cross-section in the resulting foam product. The relatively high elongational viscosity of the melt polymer affords greater (relative to the above lower M_{w} polymer chains and conventional PS feedstocks) melt strength and, subsequently, improved foam expansion of the melt out of the die prior to the cooling and cessation of expansion. The distribution of polymer chains with a M_{w} > 1,000,000 is limited to minimize or prevent flow stabilization problems arising from excess elongational viscosity.

Table 1 sets forth data for Comps 1 & 2 and Samps 3 & 4.

**Table 1**

| Sample Name | Unit | Comp 1* | Comp 2* | Samp 3 | Samp 4 |
|---|---|---|---|---|---|
| PS | | | | | |
| M_{w} | - | 193300 | 193000 | 150000 | 200000 |
| Mₙ | - | 86200 | 86800 | 45600 | 73000 |
| M_{w}/Mₙ | - | 2.24 | 2.24 | 3.29 | 2.75 |
| Total BA | pph | 9.1 | 9.7 | 10 | 9.2 |
| HFC-134a | pph | 6.4 | 6.5 | 6.9 | 6.7 |
| CO₂ | pph | 0.5 | 0.5 | 0.6 | 0.4 |
| Ethanol | pph | 2.2 | 2.7 | 2.5 | 2.1 |
| HFC's+CO₂ moles | gmph | 0.074 | 0.075 | 0.081 | 0.084 |
| CO₂/HFC Mole ratio | | 0.16 | 0.17 | 0.2 | 0.14 |
| Foam thickness (avg) | mm | 50 | 100 | 50 | 100 |
| Density | kg/m³ | 36.4 | 37.3 | 37.8 | 38.4 |
| Cell size | mm | 0.29 | 0.26 | 0.21 | 0.34 |
| Open cell | % | 20.4 | 6.3 | 1.8 | 0.5 |
| Vertical compressive | kPa | 485 | 466 | 375 | 381 |
| Extruded compressive | kPa | 173 | 193 | 328 | 258 |
| Horizontal compressive | kPa | 257 | 255 | 258 | 313 |
| DIN 18164 - WD | % | 0.6 | - | 4.4 | 1.3 |
| Sliced Lambda 10°C at 90days | mW/m .K | 31.2 | 31.7 | 28.6 | 29.8 |

| | | | | | |
|---|---|---|---|---|---|
| (*)=Comparative not an object of the present invention. | | | | | |

The foams produced with conventional PS resin, narrow distribution and polydispersity of < 2.5 exhibited a very high amount of open cell, and having poorer thermal insulation performance, while the foams made with broader MWD polymer (M_{w}/Mₙ > 2.5) had a very low open cell, and excellent thermal conductivity.

All foams were made with total moles of HFC-134a and CO₂ < 0.085 gmph to show that the resin has an influence on the properties of the foam.

### Example 1

There is a limit to the total moles of the HFC and CO₂ blowing agent mixture that can be used to make a suitable foam such as that of Samps 3 and 4.

This Example shows that even with PS resin having a polydispersity of > 2.5, foam with suitable properties cannot be made if the total moles of HFC-134a and CO₂ exceed 0.090 gmph.

Samp 5, an example of the invention, was made with a PS resin of M_{w} = 150,000 and M_{w}/Mₙ = 3.29. The physical property testing shows that very desirable foam properties can be produced with this blowing agent level. Samp 6, also an example of the invention, was made with a PS resin of M_{w} = 200,000 and M_{w}/Mₙ = 2.75. Both examples used a broad MWD PS resin with total moles of HFC-134a + CO₂ < 0.09 gmph and a mole ratio of CO2/HFC-134a < 0.8 to reach a desirable long term thermal conductivity.

Comps 7 and 8 were also made with a broad MWD resin but with a sum of HFC-134a + CO₂ moles > 0.090 gmph and a CO₂ /HFC-134a mole ratio > 0.8.

The data in Table 2 show that the foams of Samps 5 and 6 had better thermal conductivity results than the foams of Comps 7 and 8. See the sliced Lamda data to confirm this point.

**Table 2**

| Sample Name | Unit | Samp 5 | Samp 6 | Comp 7* | Comp 8* |
|---|---|---|---|---|---|
| PS | | | | | |
| M_{w} | - | 150000 | 200000 | 200000 | 200000 |
| Mₙ | - | 45600 | 73000 | 73000 | 73000 |
| M_{w}/Mₙ | - | 3.29 | 2.75 | 2.75 | 2.75 |
| Total BA | pph | 10 | 9.2 | 8 | 8.8 |
| HFC-134a | pph | 6.9 | 6.7 | 4 | 5.4 |
| CO₂ | pph | 0.6 | 0.4 | 2.5 | 1.9 |
| Ethanol | pph | 2.5 | 2.1 | 1.5 | 1.5 |
| HFC's+CO₂ moles | mph | 0.081 | 0.084 | 0.095 | 0.096 |
| CO₂/HFC mole ratio | | 0.2 | 0.14 | 1.4 | 0.81 |
| Foam thickness (avg) | mm | 50 | 100 | 50 | 100 |
| Density | kg/m³ | 37.8 | 38.4 | 39.8 | 38.6 |
| Cell size | mm | 0.21 | 0.34 | 0.21 | 0.18 |
| Open cell | % | 1.8 | 0.5 | 0.5 | 0.8 |
| Vertical compressive | kPa | 375 | 381 | 644 | 743 |
| Extruded compressive | kPa | 328 | 258 | 166 | 211 |
| Horizontal compressive | kPa | 258 | 313 | 218 | 258 |
| DIN 18164 - WD | % | 4.4 | 1.3 | 1.3 | 1.5 |
| Sliced Lambda 10°C at 90days | mW/m.K | 28.6 | 29.8 | 33.6 | 36 |

| | | | | | |
|---|---|---|---|---|---|
| (*)=Comparative not an object of the present invention. | | | | | |

### Example 2

In these experiments, PS having a M_{w} of 147,000 and a M_{w}/Mₙ=3.3 was added to a 2-inch (50 mm) single-screw extruder without a fire retardant, but with other typical additives and melted prior to injection and mixing of the blowing agents. The resulting mixture was allowed to cool and converted to foam. The mixture included isopropanol as part of the blowing agent mixture. The physical properties of the foam were measured and reported in Table 3.

**Table 3**

| Sample Name | Unit | Comp 9* | Samp 10 | Samp 11 | Samp 12 |
|---|---|---|---|---|---|
| Polystyrene | | | | | |
| M_{w} | - | 147000 | 147000 | 147000 | 147000 |
| Mₙ | - | 44000 | 44000 | 44000 | 44000 |
| M_{w}/Mₙ | - | 3.3 | 3.3 | 3.3 | 3.3 |
| Total BA | pph | 7.5 | 9.5 | 9.5 | 10 |
| HFC-134a | pph | 3.5 | 7.5 | 7.5 | 7.5 |
| CO₂ | pph | 2.5 | - | - | - |
| Ethanol | pph | - | 1.5 | 0.5 | - |
| Iso-propanol | pph | 1.5 | 0.5 | 1.5 | 2.5 |
| HFC's+CO₂ moles | mph | 0.091 | 0.074 | 0.074 | 0.074 |
| CO₂/HFC mole ratio | | 1.6 | 0 | 0 | 0 |
| Foam thickness (avg) | mm | 30 | 30 | 30 | 30 |
| Density | kg/m³ | 34.5 | 37 | 40.8 | 38.9 |
| Cell size | mm | 0.28 | 0.24 | 0.19 | 0.19 |
| Open cell | % | 0.9 | 0.5 | 0.6 | 1.7 |
| Vertical compressive | kPa | 579 | 476 | 594 | 530 |
| Extruded compressive | kPa | 136 | 292 | 329 | 196 |
| Horizontal compressive | kPa | 174 | 249 | 258 | 194 |
| DIN 18164 - WD | % | 3.1 | 0.4 | 1.6 | 2.0 |
| Lambda 10°C @90days | mW/m.K | 32.1 | 27 | 27.3 | 28.6 |

| | | | | | |
|---|---|---|---|---|---|
| (*) = Comparative, not part of the present invention. | | | | | |

The data in Table 3 illustrate several points. First, the data show that isopropanol, either alone or in admixture with ethanol, effectively substitutes for ethanol. Second, the Comps show that use of a HFC/CO₂ combination > 0.090 gmph and a molar ratio of CO₂ to HFC > 0.8 yields a foam with an unacceptable thermal conductivity. Third, even in the absence of CO₂, an HFC content > 4.8 pph (7.5 pph in Samps 10-12) yields a foam with an acceptable thermal conductivity.

### Example 3

A series of styrenic polymer foams was prepared using the apparatus of Example 2 and the compositions and process parameters shown in Table 4. Table 4 also summarizes foam property data for such foams.

A primary feedstock consisting of a PS was fed into the extruder, along with other formulation additives including 2.7 pph (part per hundred part of resin) of fire retardant hexabromocyclododecane (HBCD) and 0.9 pph of additives, composing of extrusion aid, dye and acid scavenger.

Comp 13* was made with a narrow MWD PS, having M_{w}=136,000 and M_{w}/Mₙ=2.3. The blowing agent mixture contained HFC-134a (67 %), HFC-32 (11 %) and pentane isomers (22 %). The total HFC content was 0.078 gmph .

Comp 14* was made with a broad MWD PS, having M_{w}=147,000 and M_{w}/Mₙ=3.3, but the blowing agent mixture was a mixture of HFC-134a (67 %), HFC-32 (22 %) and pentane isomers (11 %). The total HFC content was 0.097 gmph.

Comp 15* was made with a broad MWD PS, having M_{w}=147,000 and M_{w}/Mₙ=3.3, but the blowing agent mixture contained HFC-134a (76 %) and HFC-32 (24 %). The total HFC content was 0.102 gmph.

Samp 16 was made with the blowing agent composition of Comp 13 and the PS of Comp 16*, that is, with a broad MWD.

Samp 17 was made with the broad MWD PS, using a mixture of HFC-134a/C₅ : 65/35 percent by weight.

Samp 18 was made with the broad MWD PS, using a mixture of HFC-134a (74 %), pentane isomers (16 %) and ethanol (10 %). The total HFC-134a content was 0.069 gmph.

Samp 19 was made with the broad MWD PS, using a mixture of HFC-134a (70 %), pentane (12 %) and propane isomers (18 %). The total HFC-134a content was 0.059 gmph.

Samp 20 was made with the broad MWD PS, using a mixture of HFC-134a (74 %), CO₂ (5 %) and ethanol (21 %). The total HFC-134a content was 0.080 gmph.

As can be seen, the Comps produced with a conventional PS (narrow MWD) or with a high level of HFCs+ CO₂ (>0.09 mph), exhibited a very high open cell content, and poor thermal conductivity despite smaller cell size.

The foams made with broad MWD PS and with a lower level of HFCs + CO₂ moles (≤ 0.090 gmph) presented excellent thermal conductivity and very low open cell content. The data for such foams also show very good mechanical properties and excellent thermal dimensional stability. The foams are suitable for use as insulating material. Note that all Samps used a mole ratio of CO₂ /HFC-134a of < 0.8.

**Table 4**

| Sample Name | Unit | Comp 13* | Comp 14* | Comp 15* | Samp 16 | Samp 17 | Samp 18 | Samp 19 | Samp 20 |
|---|---|---|---|---|---|---|---|---|---|
| PS | | | | | | | | | |
| M_{w} | - | 136 | 147 | 147 | 147 | 147 | 147 | 147 | 147 |
| Mₙ | - | 60 | 44 | 44 | 44 | 44 | 4.4 | 44 | 44 |
| M_{w}/Mₙ | - | 2.3 | 3.3 | 3.3 | 3.3 | 3.3 | 3.3 | 3.3 | 3.3 |
| Total BA | pph | 9.0 | 9.0 | 8.5 | 9.0 | 9.2 | 9.5 | 8.5 | 9.5 |
| HFC-134a | pph | 6 | 6 | 6.5 | 6 | 6 | 7 | 6 | 7 |
| HFC-32 | pph | 1 | 2 | 2 | 1 | | | | |
| CO₂ | pph | | | | | | | | 0.5 |
| pentane (70:30 n:iso) | pph pph | 2 2 | 1 1 | | 2 2 | 3.2 | 1.5 | 1 1 | |
| Propane | pph | | | | | | | 1.5 | |
| Ethanol | pph | | | | | | 1 | | 2 |
| HFC's+CO₂ moles | mph | 0.078 | 0.097 | 0.102 | 0.078 | 0.059 | 0.069 | 0.059 | 0.080 |
| CO₂/HFC mole ratio | | 0 | 0 | 0 | 0 | 0 | 0 | 0 | 0.2 |
| Foam Thickness (avg) | mm | 30 | 25 | 26 | 28 | - | 24 | 27 | 29 |
| Density | kg/m³ | 39.9 | 41.6 | 46.6 | 40.9 | 39.5 | 39.1 | 42 | 34.7 |
| Cell size | mm | 0.23 | 0.17 | 0.17 | 0.21 | 0.28 | 0.21 | 0.18 | 0.32 |
| Open cell | % | 22.4 | 47.8 | 64.3 | 4.4 | 3.5 | 6.7 | 3.3 | 3.8 |
| Vertical compressive | kPa | 527 | 517 | 500 | 533 | - | 389 | 544 | 332 |
| Extruded compressive | kPa | 196 | 225 | 289 | 227 | - | 198 | 331 | 252 |
| Horizontal compressive | kPa | 205 | 180 | 226 | 205 | - | 211 | 259 | 199 |
| DIN 18164 -WD | % | 1.4 | - | - | 2.5 | 1.1 | 2 | 1.9 | 1.8 |
| Lambda 10°C @30days | mW/m.K | 27.8 | 35.6 | 36.2 | 27.3 | 25.8 | 28.3 | 26.3 | 24.6 |

| | | | | | | | | | |
|---|---|---|---|---|---|---|---|---|---|
| (*) = Comparative, not part of the present invention. | | | | | | | | | |

## Claims

1. An insulating, closed-cell, extruded thermoplastic polymer foam having a thermal conductivity according to EN-13164 of 30 mW/m.°K or less, and a closed cell content of 90% or greater as measured by ASTM D-2856, comprising:
(A) a polymer comprising, in polymerized form, 50 percent or more by weight monovinyl aromatic monomeric units, and having a mean weight average molecular weight of from 130,000 to 400,000, and an Mw/Mn of 2.5 or greater;
(B) blowing agent residuals from production of freshly formed cells of the foam by extruding of a mixture of the polymer and a blowing agent mixture comprising:
(i) a primary blowing agent comprising:
(a) from 30 to 90 percent by weight, based on blowing agent mixture weight, of one or more fluorinated hydrocarbons, and, optionally,
(b) from greater than 0 to 50 percent by weight, based on blowing agent mixture weight, carbon dioxide;
the sum of gram-moles of fluorinated hydrocarbon(s) and, if present, carbon dioxide in the blowing agent mixture being equal to or less than 0.09 gram-moles per 100 grams of polymer, and the molar ratio of moles of carbon dioxide to moles of fluorinated hydrocarbon(s) being 0.8 or less;
(ii) from 10 to 70 percent by weight, based on blowing agent mixture weight, of a secondary blowing agent comprising an alcohol having from 1 to 4 carbon atoms, a linear or cyclic hydrocarbon having from 1 to 5 carbon atoms, water or a mixture thereof.

2. The foam of Claim 1, wherein the blowing agent mixture is used in a concentration of from 0.08 gram-moles to 0.2 gram-moles per 100 grams of polymer.

3. The foam of Claim 1 or Claim 2, wherein the primary blowing agent comprises up to 50 percent by weight, based on blowing agent mixture weight, carbon dioxide.

4. The foam of any one of the preceding claims wherein the monovinyl aromatic polymer is polystyrene.

5. The foam of any one of the preceding claims, wherein the fluorinated hydrocarbon(s) are present in the blowing agent mixture in an amount of 4.8 parts or more per hundred parts of polymer.

6. The foam of any one of the preceding claims, wherein carbon dioxide is present in an amount of from 0.1 to 20 percent by weight of the blowing agent mixture.

7. The foam of any one of the preceding claims, wherein the fluorinated hydrocarbon is selected from methyl fluoride, difluoromethane (HFC-32), perfluoromethane , ethyl fluoride (HFC-161), 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), pentafluoroethane (HFC-125), perfluoroethane, 2,2-difluoropropane (HFC-272fb), 1,1,1-trifluoropropane (HFC-263fb), 1,1,1,3,3-pentafluoropropane (HFC-245fa), heptafluoropropane (HFC-227ca and HFC-227ea), 1,1,1,3,3-pentafluorobutane (HFC-365mfc), perfluoropropane, perfluorobutane or perfluorocyclobutane.

8. The foam of any one of the preceding claims, wherein the fluorinated hydrocarbon is 1,1,1,2-tetrafluoroethane (HFC-134a).

9. The foam of any one of the preceding claims, wherein the secondary blowing agent is methane, ethane, propane, n-butane, isobutane, n-pentane, isopentane, neopentane, cyclobutane, cyclopentane, methanol, ethanol, n-propanol and isopropanol, or a mixture thereof.

10. The foam of any one of the preceding claims, wherein the foam has a cross sectional area in the direction of extrusion of 50 cm² or greater.

11. The foam of any one of the preceding claims, wherein the foam has a thickness of from 5 mm to 250 mm.

12. The foam of any one of the preceding claims, wherein the foam has cells with an average cell size of from 0.07 to 1.4 mm.

13. The foam of any one of the preceding claims, wherein the foam further comprises an infrared attenuator.

14. The foam of Claim 13, wherein the infrared attenuator is selected from carbon black, graphite, aluminum flake or titanium dioxide.

15. The foam of any one of the preceding claims, wherein the foam has a density of from 10 to 150 kg/m³ (kilograms per cubic meter) according to ASTM D-1622-88.

16. A process for producing the extruded, monovinyl aromatic polymer foam of Claim 1 comprising:
a) producing a melt polymer material by heating a polymer comprising, in polymerized form, 50 percent or more by weight monovinyl aromatic monomeric units, and having a mean weight average molecular weight of between 130,000 to 400,000, and an Mw/Mn of 2.5 or greater;
b) forming a foamable gel by incorporating into the melt polymer material at an elevated temperature a blowing agent mixture comprising:
(i) a primary blowing agent comprising:
(a) from 30 to 90 percent by weight, based on blowing agent mixture weight, of one or more fluorinated hydrocarbons, and, optionally,
(b) from greater than 0 to 50 percent by weight, based on blowing agent mixture weight, carbon dioxide;
the sum of gram-moles of fluorinated hydrocarbon(s) and, if present, carbon dioxide in the blowing agent mixture being equal to or less than 0.09 gram-moles per 100 grams of polymer, and the molar ratio of moles of carbon dioxide to moles of fluorinated hydrocarbon(s) being 0.8 or less;
(ii) from 10 to 70 percent by weight, based on blowing agent mixture weight, of a secondary blowing agent comprising an alcohol having from 1 to 4 carbon atoms, a linear or cyclic hydrocarbon having from 1 to 5 carbon atoms, water or a mixture thereof:
c) cooling the foamable gel to a desirable foaming temperature;
d) extruding the foamable gel through a die to form the foam.

17. A process of Claim 16, wherein the monovinyl aromatic polymer is a broad MWD polystyrene; the fluorinated hydrocarbon is a hydrogen containing fluoracarbon; the polymer material and blowing agent are mixed in an extruder or mixer at a temperature of 175-250 °; and the resultant mixture is then cooled in a controlled manner using a second extruder and/or heat exchangers before being allowed to expand in a controlled manner through a die at a temperature of 105-130 °C.

18. A process of Claim 16, wherein the blowing agent and/or polymer is as defined in any one of Claims 2 to 9.

## Patentansprüche

1. Ein isolierender, extrudierter thermoplastischer Polymerschaum mit geschlossenen Zellen, der eine thermische Leitfähigkeit gemäß EN-13164 von 30 mW/m°K oder weniger hat und einen Gehalt an geschlossenen Zellen von 90% oder mehr, wie es durch ASTM D-2856 gemessen wird, enthaltend;
(A) ein Polymer, das in polymerisierter Form 50 Gew.-% oder mehr monovinylaromatische monomere Einheiten enthält und ein mittleres gewichtsmittleres Molekulargewicht von 130.000 bis 400.000 und ein Mw/Mn von 2,5 oder größer hat;
(B) Treibmittelreste aus der Herstellung frisch gebildeter Zellen des Schaums durch Extrudieren einer Mischung des Polymers und einer Treibmittelmischung, enthaltend:
(i) ein primäres Treibmittel, enthaltend:
(a) von 30 bis 90 Gew.-%, bezogen auf das Gewicht der Treibmittelmischung, eines oder mehrerer fluorinierter Kohlenwasserstoffe(s), und, optional,
(b) von mehr als 0 bis 50 Gew.-%, bezogen auf das Gewicht der Treibmittelmischung, Kohlendioxid;
wobei die Summe der Gramm-Mole der/des fluorinierten Kohlenwasserstoffe(s) und, wenn es vorliegt, des Kohlendioxids in der Treibmittelmischung gleich oder weniger als 0,09 Gramm-Mole pro 100 g des Polymers ist und das molare Verhältnis von Molen Kohlendioxid zu Molen fluorinierten/fluoriniertem Kohlenwasserstoff(en) 0,8 oder weniger ist;
(ii) von 10 bis 70 Gew.-%, bezogen auf das Gewicht der Treibmittelmischung, eines sekundären Treibmittels, das einen Alkohol mit von 1 bis 4 Kohlenstoffatomen, einen linearen oder cyclischen Kohlenwasserstoff mit von 1 bis 5 Kohlenstoffatomen. Wasser oder eine Mischung davon enthält.

2. Der Schaum gemäß Anspruch 1, wobei die Treibmittelmischung in einer Konzentration von 0,08 Gramm-Molen bis 0,2 Gramm-Molen pro 100 g des Polymers verwendet wird.

3. Der Schaum gemäß Anspruch 1 oder 2, wobei das primäre Treibmittel bis zu 50 Gew.-%, bezogen auf das Gewicht der Treibmittelmischung, an Kohlendioxid enthält.

4. Der Schaum gemäß einem der vorhergehenden Ansprüche, wobei das monovinylaromatische Polymer Polystyrol ist.

5. Der Schaum gemäß einem der vorhergehenden Ansprüche, wobei der/die fluorinierte(n) Kohlenwasserstoff(e) in der Treibmittelmischung in einer Menge von 4,8 Teilen oder mehr pro 100 Teile des Polymers vorliegt.

6. Der Schaum gemäß einem der vorhergehenden Ansprüche, wobei Kohlendioxid in einer Menge von 0,1 bis 20 Gew.-% der Treibmittelmischung vorliegt.

7. Der Schaum gemäß einem der vorhergehenden Ansprüche, wobei der fluorinierte Kohlenwasserstoff ausgewählt ist aus Methylfluorid, Difluormethan (HFC-32), Perfluormethan, Ethylfluorid (HFC-161), 1,1-Difluorethan (HFC-152a), 1,1,1-Trifluorethan (HFC-143a), 1,1,1,2-Tetrafluorethan (HFC-134a), 1,1,2,2-Tetrafluormethan (HFC-134), Pentafluorethan (HFC-125), Perfluorethan, 2,2-Difluorpropan (HFC-272fb), 1,1,1-Trifluorpropan (HFC-263fb), 1,1,1,3,3-Pentafluorpropan (HFC-245fa), Heptafluorpropan (HFC-227ca und HFC-227ea), 1,1,1,3,3-Pentafluorbutan (HFC-365mfc), Perfluorpropan, Perfluorbutan oder Perfluorcyclobutan.

8. Der Schaum gemäß einem der vorhergehenden Ansprüche, wobei der fluorinierte Kohlenwasserstoff 1,1,1,2-Tetrafluorethan (HFC-134a) ist.

9. Der Schaum gemäß einem der vorhergehenden Ansprüche, wobei das sekundäre Treibmittel Methan, Ethan, Propan, n-Butan, Isobutan, n-Pentan, Isopentan, Neopentan, Cyclobutan, Cyclopentan, Methanol, Ethanol, n-Propanol und Isopropanol oder eine Mischung daraus ist.

10. Der Schaum gemäß einem der vorhergehenden Ansprüche, wobei der Schaum einen Querschnittsbereich in Richtung der Extrusion von 50 cm² oder mehr hat.

11. Der Schaum gemäß einem der vorhergehenden Ansprüche, wobei der Schaum eine Dicke von 5 mm bis 250 mm hat.

12. Der Schaum gemäß einem der vorhergehenden Ansprüche, wobei der Schaum Zellen mit einer durchschnittlichen Zellgröße von 0,07 bis 1,4 mm hat.

13. Der Schaum gemäß einem der vorhergehenden Ansprüche, wobei der Schaum außerdem einen Infrarotdämpfer enthält.

14. Der Schaum gemäß Anspruch 13, wobei der Infrarotdämpfer ausgewählt ist aus Ruß, Graphit, Aluminiumflocken oder Titaniumdioxid.

15. Der Schaum gemäß einem der vorhergehenden Ansprüche, wobei der Schaum eine Dichte von 10 bis 150 kg/m³ (Kilogramm pro Kubikmeter) entsprechend ASTM D-162Z-88 hat.

16. Ein Verfahren zur Herstellung des extrudierten monovinylaromatischen Polymerschaums gemäß Anspruch 1, umfassend:
a) Herstellen eines Schmelzpolymermaterials durch Erwärmen eines Polymers, das in polymerisierter Form 50 Gew.-% oder mehr monovinytaromatische Monomereinheiten enthält und ein mittleres gewichtsmittleres Molekulargewicht von zwischen 130.000 bis 400.000 und ein Mw/Mn von 2,5 oder größer hat;
b) Bilden eines schäumbaren Gels durch Einarbeiten einer Treibmittelmischung in das geschmolzene Polymermaterial bei einer erhöhten Temperatur, welches enthält:
(i) ein primäres Treibmittel, enthaltend:
(a) von 30 bis 90 Gew.-%, bezogen auf das Gewicht der Treibmittelmischung, eines oder mehrerer fluorinierter Kohlenwasserstoffe(s), und, optional,
(b) von mehr als 0 bis 50 Gew.-%, bezogen auf das Gewicht der Treibmittelmischung, Kohlendioxid;
wobei die Summe der Gramm-Mole der/des fluorinierten Kohlenwasserstoffe(s) und, wenn es vorliegt, des Kohlendioxids in der Treibmittelmischung gleich oder weniger als 0,09 Gramm-Mole pro 100 g des Polymers ist und das molare Verhältnis der Mole von Kohlendioxid zu Molen an fluorinierten/fluoriniertern Kohlenwasserstoff(en) 0,8 oder weniger ist;
(ii) von 10 bis 70 Gew.-%, bezogen auf das Gewicht der Treibmittelmischung, eines sekundären Treibmittels, das einen Alkohol mit von 1 bis 4 Kohlenstoffatomen, einen linearen oder cyclischen Kohlenwasserstoff mit von 1 bis 5 Kohlenstoffatomen, Wasser oder eine Mischung davon enthält,
c) Kühlen des schäumbaren Gels auf eine gewünschte Schäumtemperatur;
d) Extrudieren des schäumbaren Gels durch eine Düse, um den Schaum zu formen.

17. Ein Verfahren gemäß Anspruch 16, wobei das monovinylaromatische Polymer ein ausgedehntes MWD-Polystyrol ist; der fluorinierte Kohlenwasserstoff ein Wasserstoff enthaltendes Fluorcarbon ist; das Polymermaterial und das Treibmittel werden in einem Extruder oder einem Mischer bei einer Temperatur von 175-250°C gemischt und die sich ergebende Mischung wird dann in einer kontrollierten Weise unter Verwendung eines zweiten Extruders und/oder eines Hitzetauschers gekühlt, bevor sie in einer kontrollierten Weise durch eine Düse bei einer Temperatur von 105-130°C expandieren gelassen wird.

18. Ein Verfahren gemäß Anspruch 16, wobei das Treibmittel und/oder das Polymer wie in einem der Ansprüche 2 bis 9 definiert ist.

## Revendications

1. Mousse de polymère thermoplastique, extrudée, isolante et à cellules fermées, dont la conductivité thermique, mesurée selon la norme EN-13164, vaut au plus 30 mW/m.K et dont la teneur en cellules fermées, mesurée selon la norme ASTM D-2856, vaut au moins 90 %, et qui comprend :
A) un polymère qui comprend, à l'état polymérisé, au moins 50 % en poids de motifs de monomère monovinyl-aromatique et dont la masse molaire moyenne en poids vaut de 130 000 à 400 000 et le rapport Mw/Mn vaut au moins 2,5 ;
B) et des résidus d'agent d'expansion qui proviennent de la production de cellules récemment formées dans la mousse lors de l'extrusion d'un mélange constitué du polymère et d'un mélange d'agents d'expansion comprenant :
i) un agent d'expansion primaire comprenant :
a) de 30 à 90 % en poids, par rapport au poids du mélange d'agents d'expansion, d'un ou de plusieurs hydrocarbures fluorés,
b) et en option, de plus de 0 à 50 % en poids, par rapport au poids du mélange d'agents d'expansion, de dioxyde de carbone,
la somme des quantités d'hydrocarbure(s) fluoré(s) et d'éventuel dioxyde de carbone dans le mélange d'agents d'expansion étant inférieure ou égale à 0,09 molécule-gramme pour 100 grammes de polymère, et le rapport du nombre de moles de dioxyde de carbone au nombre de moles d'hydrocarbure(s) fluoré(s) valant au plus 0,8,
ii) et de 10 à 70 % en poids, par rapport au poids du mélange d'agents d'expansion, d'un agent d'expansion secondaire comprenant un alcool dont la molécule comporte 1 à 4 atomes de carbone, un hydrocarbure linéaire ou cyclique dont la molécule comporte 1 à 5 atomes de carbone, ou de l'eau, ou encore un mélange de ces composés.

2. Mousse conforme à la revendication 1, pour laquelle on emploie le mélange d'agents d'expansion en une proportion de 0,08 à 0,2 molécule-gramme pour 100 grammes de polymère.

3. Mousse conforme à la revendication 1 ou 2, pour laquelle l'agent d'expansion primaire comprend jusqu'à 50 % en poids, par rapport au poids du mélange d'agents d'expansion, de dioxyde de carbone.

4. Mousse conforme à l'une des revendications précédentes, dans laquelle le polymère de composé monovinyl-aromatique est un polystyrène.

5. Mousse conforme à l'une des revendications précédentes, pour laquelle l'hydrocarbure fluoré ou les hydrocarbures fluorés se trouve(nt) présent(s), dans le mélange d'agents d'expansion, en une quantité d'au moins 4,8 parties pour 100 parties de polymère.

6. Mousse conforme à l'une des revendications précédentes, pour laquelle le dioxyde de carbone se teouve présent en une quantité représentant de 0,1 à 20 % du poids du mélange d'agents d'expansion.

7. Mousse conforme à l'une des revendications précédentes, pour laquelle l'hydrocarbure fluoré est choisi parmi les suivants : fluorure de méthyle, difluorométhane (HFC-32), perfluorométhane, fluorure d'éthyle (HFC-161), 1,1-difluoroéthane (HFC-152a), 1,1,1-trifluvroéthane (HFC-143a), 1,1,1,2-tétrafluoroéthane (HFC-134a), 1,1,2,2-tétrafluoroéthane (HFC-134), pentafluoroéthane (HFC-125), perfluoroéthane, 2,2-difluoropropane (HFC-272fb), 1,1,1-trifluoropropane (HFC-263fb), 1,1,1,3,3-pentafluoropropane (HFC-245fa), heptafluoropropane (HFC-227ca ou HFC-227ea), 1,1,1,3,3-pentafluorobutane (HFC-365mfc), perfluoropropane, perfluorobutane et perfluorocyclobutane.

8. Mousse conforme à l'une des revendications précédentes, pour laquelle l'hydrocarbure fluoré est du 1,1,1,2-tétrafluoroéthane (HFC-134a).

9. Mousse conforme à l'une des revendications précédentes, pour laquelle l'agent d'expansion secodaire est du méthane, de l'éthane, du propane, du n-butane, de l'isobutane, du n-pentane, de l'isopentane, du néo-pentane, du cyclobutane, du cyclopentane, du méthanol, de l'éthanol, du n-propanol ou de l'isopropanol, ou un mélange de ces composés.

10. Mousse conforme à l'une des revendications précédentes, laquelle mousse présente une aire de section transversale, dans la direction d'extrusion, d'au moins 50 cm².

11. Mousse conforme à l'une des revendications précédentes, laquelle mousse présente une épaisseur de 5 à 250 mm.

12. Mousse conforme à l'une des revendications précédentes, dans laquelle la taille moyenne des cellules vaut de 0,07 à 1,4 mm.

13. Mousse conforme à l'une des revendications précédentes, laquelle mousse contient en outre un agent atténuant le rayonnement infrarouge.

14. Mousse conforme à la revendication 13, dans laquelle l'agent atténuant le rayonnement infrarouge est choisi parmi du noir de carbone, du graphite, de l'aluminium en paillettes et du dioxyde de titane.

15. Mousse conforme à l'une des revendications précédentes, laquelle mousse présente une masse volumique de 10 à 150 kg/m³ (kilogrammes par mètre cube, mesurée selon la norme ASTM D-1622-88).

16. Procédé de production d'une mousse extrudée de polymère de composé monovinyl-aromatique, conforme à la revendication 1, lequel procédé comporte :
A) le fait de préparer une masse de polymère fondu en chauffant un polymère qui comprend, à l'état polymérisé, au moins 50 % en poids de motifs de monomère monovinyl-aromatique et dont la masse molaire moyenne en poids vaut de 130 000 à 400 000 et le rapport Mw/Mn vaut au moins 2,5 ;
B) le fait d'incorporer à haute température à cette masse de polymère fondu, pour en faire un gel moussable, un mélange d'agents d'expansion comprenant :
i) un agent d'expansion primaire comprenant :
a) de 30 à 90 % en poids, par rapport au poids du mélange d'agents d'expansion, d'un ou de plusieurs hydrocarbures fluorés,
b) et en option, de plus de 0 à 50 % en poids, par rapport au poids du mélange d'agents d'expansion, de dioxyde de carbone,
la somme des quantités d'hydrocarbure(s) fluoré(s) et d'éventuel dioxyde de carbone dans le mélange d'agents d'expansion étant inférieure ou égale à 0,09 molécule-gramme pour 100 grammes de polymère, et le rapport du nombre de moles de dioxyde de carbone au nombre de moles d'hydrocarbure(s) fluoré(s) valant au plus 0,8,
ii) et de 10 à 70 % en poids, par rapport au poids du mélange d'agents d'expansion, d'un agent d'expansion secondaire comprenant un alcool dont la molécule comporte 1 à 4 atomes de carbone, un hydrocarbure linéaire ou cyclique dont la molécule comporte 1 à 5 atomes de carbone, ou de l'eau, ou encore un mélange de ces composés ;
C) le fait de faire refroidir le gel moussable jusqu'à une température souhaitable de moussage ;
D) et le fait d'extruder le gel moussable en le faisant passer à travers une filière, pour en faire une mousse.

17. Procède conforme à la revendication 16, dans lequel le polymère de composé monovinyl-aromatique est un polystyrène à large distribution des masses moléculaires, l'hydrocarbure fluoré est un hydrogénofluoro-carbure, on mélange la masse de polymère fondu et l'agent d'expansion dans une extrudeuse ou un mélangeur, à une température de 175 à 250 °C, puis on fait refroidir le mélange résultant, de façon maîtrisée, à l'aide d'une deuxième extrudeuse et/ou d'échangeurs de chaleur, avant de le laisser s'expanser, de façon maîtrisée, tout en lui faisant traverser une filière maintenue à une température de 105 à 130 °C.

18. Procédé conforme à la revendication 16, dans lequel l'agent d'expansion et/ou le polymère est ou sont tel(s) que défini(s) dans l'une des revendications 2 à 9.
